(19) Europäisches Patentamt / European Patent Office / Office européen des brevets

(11) **EP 1 896 314 B1**

(12) **FASCICULE DE BREVET EUROPEEN**

(45) Date de publication et mention de la délivrance du brevet:
**30.10.2013 Bulletin 2013/44**

(21) Numéro de dépôt: **05781864.3**

(22) Date de dépôt: **24.06.2005**

(51) Int Cl.:
**B62D 15/02** *(2006.01)*　　**B62D 13/06** *(2006.01)*

(86) Numéro de dépôt international:
**PCT/FR2005/050494**

(87) Numéro de publication internationale:
**WO 2006/136665 (28.12.2006 Gazette 2006/52)**

(54) **PROCÉDÉ DE COMMANDE DE L'ANGLE DE BRAQUAGE DES ROUES DIRECTRICES D'UN VÉHICULE**

VERFAHREN ZUR STEUERUNG DES LENKWINKELS DER FÜHRUNGSRÄDER EINES FAHRZEUGS

METHOD FOR CONTROLLING THE STEERING ANGLE OF THE VEHICLE GUIDING WHEELS

(84) Etats contractants désignés:
**AT BE BG CH CY CZ DE DK EE ES FI FR GB GR HU IE IS IT LI LT LU MC NL PL PT RO SE SI SK TR**

(43) Date de publication de la demande:
**12.03.2008 Bulletin 2008/11**

(73) Titulaire: **RENAULT TRUCKS**
**69800 St Priest (FR)**

(72) Inventeur: **DECHAMP, François**
**F-71250 CLUNY (FR)**

(74) Mandataire: **Putet, Gilles et al**
**RENAULT TRUCKS**
**VTEC France - Corporate Patents**
**TER E70 2 12**
**99, route de Lyon**
**69806 Saint Priest Cedex (FR)**

(56) Documents cités:
**DE-A1- 19 806 655　　GB-A- 2 398 050**
**US-A- 5 247 442　　US-B1- 6 854 557**

## Description

### Domaine technique

L'invention concerne un procédé de commande de la direction d'un véhicule, et notamment d'un véhicule industriel du type camion. Elle concerne plus spécifiquement les véhicules attelés comportant une articulation entre un tracteur et une remorque. Il peut donc s'agir d'un véhicule du type semi-remorque, dans lequel la semi-remorque est articulée au niveau d'une sellette sur un tracteur. Il peut également s'agir d'un attelage comportant un camion du type porteur, à l'arrière duquel est articulée une remorque.

L'invention concerne plus particulièrement les véhicules dans lesquels la direction fonctionne sans colonne de direction mécanique, mais par l'intermédiaire d'un circuit de commande électrique, électro-hydraulique ou hydraulique, commandant un actionneur agissant sur l'angle de braquage des roues directrices. Ce type de commande de direction est généralement appelée "steer by wire".

L'invention concerne donc plus précisément un procédé de commande de l'angle de braquage des roues directrices, destiné à faciliter la tâche du chauffeur lors des manoeuvres de marche arrière. En effet, compte tenu de l'articulation entre le tracteur et la remorque, les manoeuvres de marche arrière qui ne sont pas en ligne droite nécessitent d'enchaîner de façon appropriée les opérations de braquage et de contre braquage.

### Techniques antérieures

Comme déjà évoqué, les manoeuvres de marche arrière, par exemple lors de mise à quai, ou d'opérations de stationnement, nécessitent une certaine habileté de la part du chauffeur, compte tenu de l'articulation entre les deux parties du véhicule. Cette habileté est d'autant plus nécessaire que le champ de vision directe du chauffeur est relativement limité, voire inexistant puisque les rétroviseurs sont montés sur le véhicule tracteur, et ne permettent pas de visualiser l'espace à l'arrière de la remorque, lorsque celle-ci n'est pas parfaitement alignée avec le tracteur.

Pour faciliter les manoeuvres de marche arrière sur différents véhicules, des solutions ont déjà été proposées, mettant en oeuvre un dispositif d'acquisition d'image, situé à l'arrière du véhicule, et permettant de visualiser l'espace situé à l'arrière de la remorque. De tels systèmes ont notamment été décrits dans les documents DE 101 42 367, US 6 366 221, et US 6 564 122.

Le Demandeur a décrit dans le document WO2004/022413 un dispositif permettant d'une part, d'afficher le champ de vision arrière du véhicule en mode direct, sans renversement d'images tel qu'on l'obtient avec un miroir, et d'autre part, d'inverser le sens de braquage des roues sous l'action de déplacement du volant de direction.

Ceci facilite la conduite en marche arrière dans la mesure où le chauffeur se retrouve virtuellement positionné à l'arrière du véhicule. Ce système est bien adapté sur les véhicules du type porteur. En revanche, sur les véhicules articulés, il reste nécessaire pour le chauffeur d'enchaîner les étapes de braquage et de contre-braquage de manière adéquate pour réaliser la manoeuvre de marche arrière.

D'un camion à l'autre, les repères du chauffeur peuvent changer, en fonction de l'empattement du tracteur, de l'emplacement du point d'articulation, ainsi que de la longueur de la remorque.

Le document US-5.247.442 décrit un procédé de commande de l'angle de braquage de roues en fonction d'un point cible dans lequel la sélection du point cible se fait en reliant l'arrière de la remorque au point considéré par un fil monté sur un enrouleur.

### Exposé de l'invention

L'invention a pour objectif de faciliter les opérations de manoeuvre en marche arrière sur les véhicules articulés. L'invention concerne donc plus précisément un procédé de commande de l'angle de braquage des roues directrices d'un véhicule attelé, comportant un tracteur et une remorque articulée par rapport au tracteur. Ce procédé permet d'élaborer des consignes à appliquer sur un actionneur agissant sur l'angle de braquage. L'invention est définie par la revendication 1.

Dans un mode de réalisation de l'invention, pendant les manoeuvres de marche arrière :

- on sélectionne un point cible par lequel on souhaite faire passer la trajectoire du véhicule ;
- on détermine une consigne d'angle entre l'axe de la remorque et l'axe du tracteur, en fonction de la localisation du point cible et de la géométrie du véhicule ;
- on commande l'angle de braquage des roues directrices selon un asservissement qui fait tendre l'angle mesuré entre l'axe de la remorque et celui du tracteur, vers cette valeur de consigne préalablement calculée.

Autrement dit, l'invention consiste à faire en sorte que, pendant les manoeuvres en marche arrière, le système de direction soit piloté automatiquement, pour amener le véhicule à un endroit préalablement déterminé par le chauffeur. Le dispositif de commande de l'actionneur responsable de l'angle de braquage pilote ce dernier de telle manière à amener l'attelage dans une configuration qui permette d'atteindre le point visé. Les phases de braquage et de contre-braquage sont donc enchaînées automatiquement de telle sorte qu'à la fin de la manoeuvre, le point visé est atteint. Cette opération se réalise donc sans aucune intervention du chauffeur sur l'organe de commande de direction qui est inhibé. Le chauffeur n'agit que sur la commande d'accélération.

La sélection du point cible peut s'effectuer de différentes manières.

Ainsi, dans une première variante, la sélection du point cible peut être affichée en cabine, sur un écran de visualisation du champ de vision arrière du véhicule. Dans ce cas, le chauffeur peut voir en permanence le point qu'il a préalablement sélectionné, par exemple par une mire présente sur un écran. La sélection à proprement parlé du point cible peut se faire grâce à une action sur l'organe de commande de direction, et typiquement le volant, puisque le dispositif de commande du braquage assurera la commande de l'actionneur de façon autonome.

En pratique, le chauffeur peut faire évoluer la position du point cible en agissant sur son volant pendant la manoeuvre de marche arrière automatisée. Il peut également enregistrer la position du point cible au début de la manoeuvre, cette position étant mémorisée, et éventuellement actualisée sur l'écran de visualisation par un recalcul prenant en compte le déplacement du véhicule, et donc l'évolution du champ de vision arrière.

Dans une autre variante non revendiquée, la sélection du point cible peut être réalisée de façon automatique, par le choix d'une manoeuvre de déplacement à effectuer. Plus précisément, lorsque le véhicule se trouve dans une position à proximité des zones de stationnement, il est possible de proposer au chauffeur différentes manoeuvre, telles que la réalisation d'un créneau, une manoeuvre de stationnement en épi à un angle prédéterminé, ou un stationnement à 90° à gauche ou à droite. Dès lors que le chauffeur a sélectionné la manoeuvre qu'il souhaite effectuer, le dispositif de commande de l'actionneur de braquage agit conformément au procédé, de façon autonome.

Avantageusement en pratique, au moment de sa sélection, le point cible sélectionné peut être situé à une distance prédéterminée de l'arrière de la remorque. Autrement dit, le point cible peut être déterminé par ses coordonnées dans un repère lié à la remorque, et dont un axe correspond à l'axe longitudinal de cette dernière. Dans ce cas, le point cible se trouve avec une coordonnée fixe dans ce repère, et peut s'écarter latéralement de l'axe de la remorque.

La détermination de la commande de l'angle de braquage peut prendre en considération plusieurs composantes se cumulant avantageusement.

Ainsi, une première composante de la commande de l'angle de braquage est fonction du rayon de courbure de la trajectoire du point d'articulation de la remorque par rapport au tracteur. Ce rayon de courbure est déterminé par rapport à la géométrie du véhicule, et notamment la position de l'essieu arrière fixe de la remorque, ainsi que de la position du point visé.

La commande de l'angle de braquage peut intégrer une seconde composante qui est fonction, notamment par un traitement proportionnel, et/ou intégral et/ou dérivé, de la différence entre l'angle réel mesuré entre les axes du tracteur et de la remorque, et l'angle de consigne optimal au niveau de l'attelage.

En pratique, la commande de l'angle de braquage des roues peut comporter une composante supplémentaire, qui est prise en compte lorsque l'angle entre les axes du tracteur et de la remorque dépasse un seuil prédéterminé, en vue de réduire cet angle. En effet, il importe que la commande du braquage ne conduise pas à une configuration dans laquelle le tracteur s'écarte trop fortement de l'axe de la remorque, au risque de venir heurter cette dernière, et se retrouver dans une position couramment appelée de "mise en portefeuille".

**Description sommaire des figures**

La manière de réaliser l'invention, ainsi que les avantages qui en découlent ressortiront bien de la description du mode de réalisation qui suit, à l'appui des figures annexées dans lesquelles :

    La figure 1 est une vue en perspective sommaire d'un camion évoluant dans un environnement permettant la mise en oeuvre de l'invention.
    La figure 2 est une vue en perspective sommaire de l'intérieur d'une cabine d'un véhicule mettant en oeuvre le procédé conforme à l'invention.
    La figure 3 est un organigramme montrant de façon schématique l'enchaînement des étapes de l'invention.
    La figure 4 est un diagramme simplifié montrant le fonctionnement des différentes étapes de l'invention.
    La figure 5 est une vue schématique de dessus d'un camion sur lequel sont représentés les différents angles et distances utilisés dans la mise en oeuvre de l'invention.
    La figure 6 est une vue analogue à la figure 5, montrant le camion dans une configuration particulière.

**Manière de réaliser l'invention**

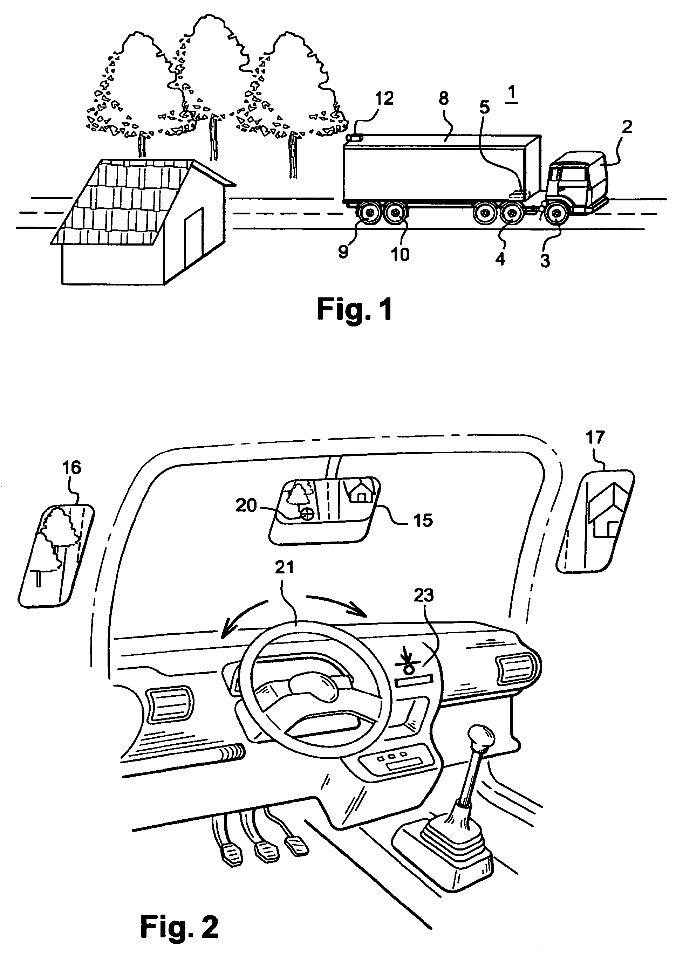

Comme déjà évoqué, l'invention concerne un procédé de commande de l'angle de braquage des roues directrices d'un véhicule articulé, tel qu'illustré à la figure 1. Un tel véhicule 1 comprend donc un tracteur 2 comportant deux essieux 3, 4, ainsi qu'une sellette 5 sur laquelle est articulé le point d'attache d'une remorque 8. Cette remorque 8 comprend en partie arrière deux essieux 9, 10 ainsi qu'un dispositif d'acquisition d'image 12 représenté schématiquement sur la paroi supérieure de la remorque 8.

Comme illustré à la figure 2, ce dispositif d'acquisition d'image 12 permet d'afficher le champ de vision arrière du véhicule sur un écran 15. A la figure 2, cet écran 15 est disposé au niveau central et haut du pare-brise, mais il va de soi qu'il pourrait être disposé dans un autre endroit, sans sortir du cadre de l'invention.

De la sorte, en combinaison avec les deux rétroviseurs gauche et droit 16, 17, le chauffeur a à sa disposition différents champs de vision complémentaires, et qui ne se recouvrent pas obligatoirement si la remorque 8 et le tracteur 2 ne sont pas alignés.

Le champ de vision affiché sur l'écran 15 peut être inversé, de la même manière qu'il l'est dans les rétroviseurs extérieurs, pour éviter de perturber les repères du chauffeur. Mais il peut également être en vision directe, conformément aux enseignements du brevet WO2004/022414.

Conformément à l'invention, le chauffeur peut effectuer une sélection d'un point cible sur lequel il souhaite voir passer la trajectoire de son véhicule, en marche arrière. La figure 2 illustre un exemple dans lequel cette sélection se fait par l'intermédiaire de l'écran de visualisation du champ 15. Plus précisément, au moment d'initier la manoeuvre de marche arrière, et par exemple donc à l'enclenchement d'une marche arrière, le chauffeur peut passer en mode de sélection de la cible, en déplaçant une mire 20 sur l'écran 15 par l'intermédiaire de son volant 21. Le déplacement du volant assure le décalage latéral de la mire dans un sens ou dans l'autre, et le calcul caractéristique de l'invention est alors mené à bien.

Il est également possible que la sélection du point cible se déroule en deux étape, à savoir une visée, suivie d'une confirmation par exemple par l'intermédiaire d'un bouton 23, ou d'un interrupteur ou analogue. Ainsi, lorsque la mire 20 coïncide avec le point cible visé par le chauffeur, ce dernier effectue une opération de validation de cette position qui va initier le calcul caractéristique de l'invention.

Dans des variantes non illustrées, il est également possible de sélectionner la manoeuvre à réaliser et donc un point cible par le choix d'une manoeuvre du type créneau, à droite ou à gauche par exemple.

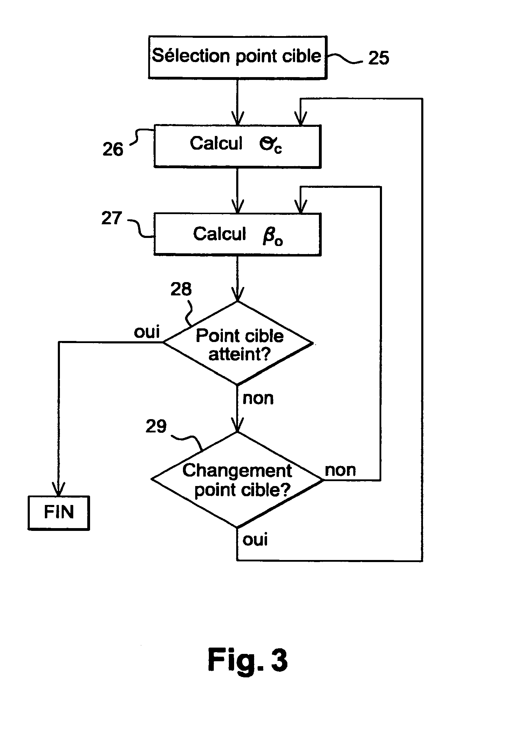

Comme illustré à la figure 3, le procédé conforme à l'invention comporte donc une première étape 25 au cours de laquelle le chauffeur sélectionne le point cible par lequel la trajectoire du véhicule doit passer. Puis, cette sélection effectuée, le procédé se poursuit par une étape 26 de calcul de l'angle $\theta_C$ correspondant à l'angle idéal que doit adopter l'axe du tracteur par rapport à l'axe de la remorque. Ce premier calcul engendre, selon l'étape 27, le calcul de la consigne $\beta_0$ d'angle de braquage, qui est appliquée au dispositif commandant l'actionneur responsable de la variation de l'angle de braquage des roues directrices. Ce procédé se poursuit tant que le point cible n'est pas atteint, ce qui est vérifié par l'étape 28.

Si le chauffeur ne modifie pas le point cible, selon le test 29, alors le procédé se poursuit de façon continue par un calcul 27 de la consigne $\beta_0$ d'angle de braquage. En effet, de par la cinématique du véhicule, les manoeuvres de braquage font mécaniquement évoluer l'angle $\theta$ de l'articulation entre le tracteur et la remorque, qui intervient dans le calcul de la consigne d'angle de braquage $\beta_0$, comme exposé ci-après.

En revanche, si le chauffeur modifie sa sélection du point cible, alors un nouveau calcul 26 de l'angle $\theta_C$ est effectué, et le procédé se poursuit par un nouveau calcul de la consigne d'angle de braquage $\beta_0$, selon l'étape 27.

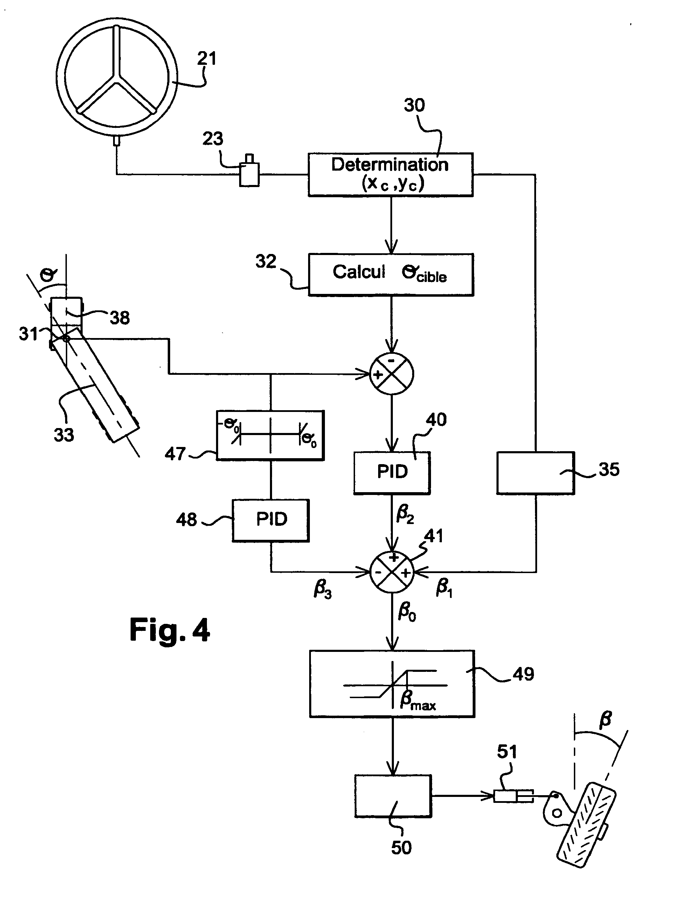

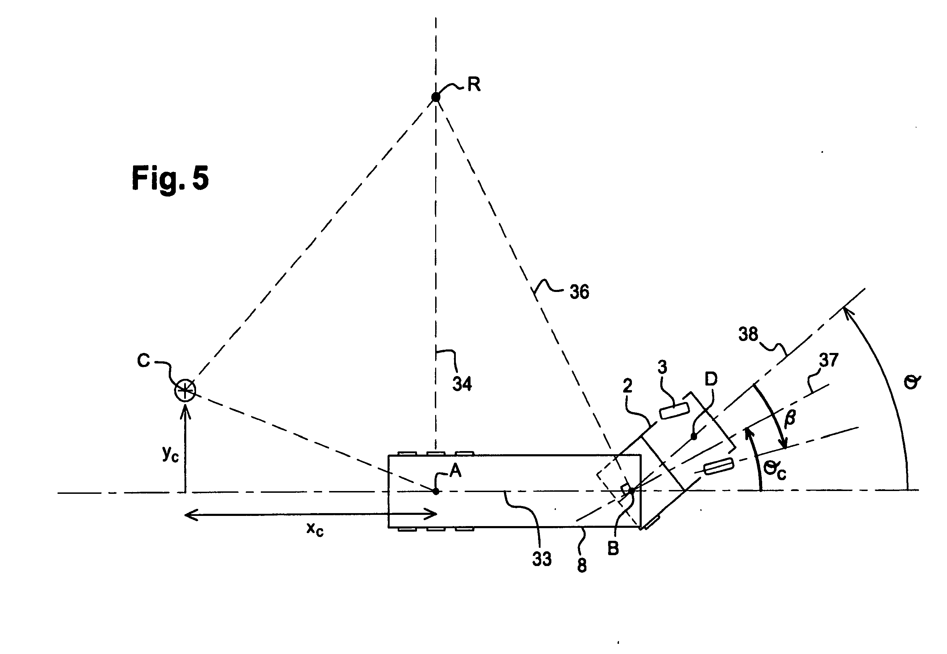

Le déroulement du procédé apparaît de façon détaillée à la figure 4 en combinaison avec la figure 5 sur laquelle apparaissent les points et axes caractéristiques du procédé. Ainsi, dès lors que le chauffeur a déterminé grâce à son volant 21 la position du point cible, et qu'il l'a éventuellement validée en agissant par exemple sur un interrupteur ou sélecteur approprié 23, le procédé conforme à l'invention est enclenché, par la détermination 30 du point cible visé C, visible à la figure 5. Cette détermination consiste à convertir la position de la mire 20 présente sur l'écran 15, en coordonnées du point cible. Cette détermination se fait par le calcul des coordonnées $x_c$ $y_c$ de ce point C dans un repère basé sur le point A, situé à l'aplomb de l'essieu fixe arrière de la remorque. Dans le cas où la remorque comporte plusieurs essieux fixes arrières, ce point A est situé à un niveau médian entre les essieux. Le repère caractéristique est donc formé par l'axe 33 de la remorque et un axe perpendiculaire 34 passant par le point A. Par hypothèse, au moment de la sélection, le point cible C se trouve avec une coordonnée $x_c$ selon l'axe 33 qui adopte une valeur prédéterminée, pouvant aller jusqu'à quelques dizaines de mètres environ. Le point cible peut s'écarter latéralement de l'axe 33 de la remorque. La position de la mire 20 sur l'écran correspond donc à un écart latéral de la mire par rapport à l'axe 33 de la remorque, qui est converti en la coordonnée $y_c$ selon l'axe 34 du repère. Dans ces conditions, le déplacement de la mire 20 selon une seule direction horizontale suffit à déterminer la position du point cible C.

De la sorte, il est possible de calculer la position du centre de rotation idéale R situé à équidistance du point visé C et du point A situé au niveau de l'essieu arrière, ce centre de rotation R étant aligné avec l'axe 34 passant par l'essieu arrière. Cet axe 34 étant perpendiculaire à l'axe 33 de la remorque, le point R est ainsi clairement défini.

Ce centre de rotation R permet de déterminer l'axe selon lequel la poussée exercée par le tracteur doit idéalement s'appliquer au niveau du point B d'articulation entre la remorque et le tracteur. Cette poussée doit idéalement s'exercer selon un axe 37 qui est perpendiculaire à la droite 36 reliant le centre de rotation R et le point d'articulation B.

De la sorte, il est possible de déterminer à l'étape 32 la valeur d'un angle $\theta_C$ correspondant à l'angle idéal que doit adopter l'axe du tracteur 38 par rapport à l'axe de la remorque 33. De manière chiffrée, et par application de règles géométriques basiques, cet angle de consigne vaut

$$\theta_c = \tan^{-1}\left(\frac{AB}{\frac{y_c}{2} + \frac{x_c^2}{2y_c}}\right),$$ où $x_c, y_c$ sont les coordonnées du point cible C dans le repère évoqué précédemment.

Un capteur d'angle 31 disposé au niveau du point d'articulation B permet de mesurer l'angle réel θ mesuré entre l'axe 33 de la remorque et celui 38 du tracteur.

Conformément à l'invention, l'asservissement utilisé pour la commande de l'angle de braquage combine plusieurs composantes qui se cumulent.

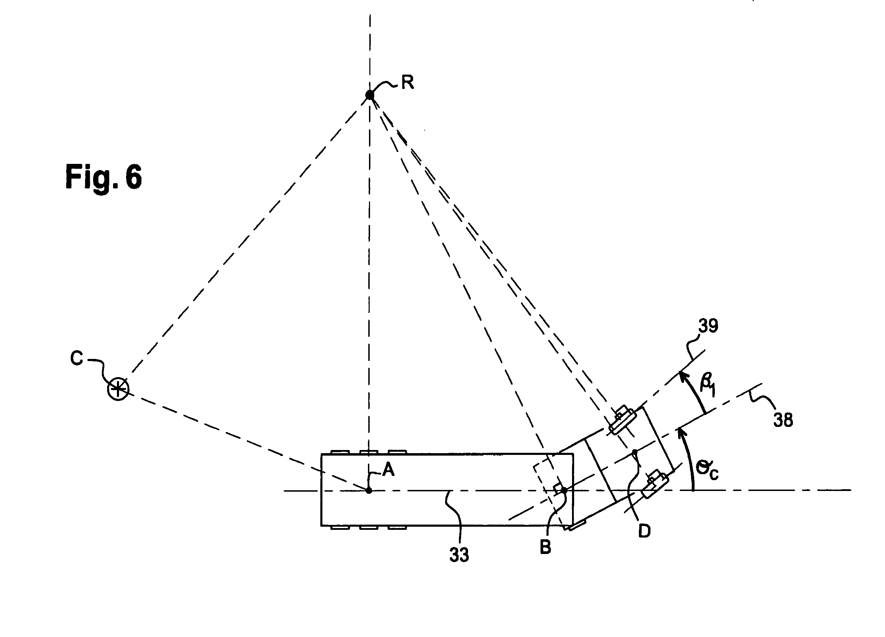

Une première composante est calculée, à l'étape 35, à partir de la position du point de rotation R, combinée avec la géométrie du véhicule et plus précisément du tracteur. Cette première composante $\beta_1$ vise à orienter les roues directrices de manière optimale lorsque l'angle entre l'axe 38 du tracteur et l'axe 33 de la remorque atteint la valeur d'angle de consigne $\theta_C$ évoquée ci-avant. Cette configuration, illustrée à la figure 6, est telle que les plans 39 des roues sont sensiblement tangents à des cercles de centre R. Cette première composante $\beta_1$ est donc prépondérante lorsque le tracteur et la remorque forment entre eux un angle se rapprochant de la valeur $\theta_C$, donc en particulier vers la fin de la manoeuvre.

En tenant compte d'approximations sur le parallélisme des roues directrices, la première composante

$\beta_1$ se calcule comme suit : $\beta_1 = \tan^{-1}(\dfrac{DB}{RB})$, dans

laquelle BD est la distance séparant le point d'articulation B du niveau du point D situé au niveau de l'essieu directeur du tracteur, et RB est la distance séparant le point de rotation idéal R du point d'articulation B de la remorque par rapport au tracteur, soit, en application de règles géométriques basiques,

$$RB = \sqrt{\left(\frac{y_c}{2} + \frac{x_c^2}{2y_c}\right)^2 + AB^2} \ .$$

Le calcul de la consigne $\beta_0$ d'angle de braquage peut inclure une seconde composante $\beta_2$ résultant d'un traitement de la différence entre l'angle réel θ et l'angle de consigne $\theta_C$. Cette seconde composante a donc pour but de permettre au véhicule de rejoindre la trajectoire dans laquelle l'angle entre le tracteur et la remorque a atteint la valeur de consigne $\theta_C$. Elle est donc prépondérante au début de la manoeuvre, lorsque l'attelage est dans une configuration éloignée de celle qui doit idéalement conduire au point cible et qui est illustrée à la figure 6. La différence $(\theta-\theta_C)$ peut être filtrée par un régulateur PID 40 pour donner la seconde composante $\beta_2$ permettant la détermination de la consigne d'angle de braquage $\beta_0$, selon l'équation suivante :

$$\beta_2 = k_2.(\theta - \theta_c) + k_3.\frac{d(\theta - \theta_c)}{dt}$$

En pratique, le coefficient $k_2$ est déterminé en fonction des empattements combinés de la remorque et du tracteur. Ce coefficient ne doit pas être trop élevé pour éviter d'engendrer des phénomènes de contre-braquage trop rapides. Il doit toutefois être suffisant pour permettre au véhicule d'atteindre la trajectoire souhaitée le plus rapidement possible. Le coefficient $k_3$ du régulateur PID 40 assure une fonction d'amortissement, et limite la vitesse de variation de la consigne $\beta_0$ d'angle de braquage, lorsque la vitesse de variation de l'angle θ est trop importante. Ces coefficients peuvent également dépendre d'une éventuelle limitation de la vitesse du véhicule, mise en oeuvre lors des manoeuvres de marche arrière. En effet, si la vitesse est limitée, les risques de mise en portefeuille sont plus réduits, et il est alors possible d'utiliser des coefficients plus élevés pour le PID 40, donnant une correction plus réactive.

Cette seconde composante $\beta_2$ vient s'ajouter à la première composante $\beta_1$ au niveau de l'additionneur 41. Ces deux composantes sont importantes pour appliquer au dispositif de commande du braquage des roues directrices une consigne qui permette d'atteindre le point cible le plus rapidement possible.

Par ailleurs, pour éviter la mise en portefeuille du camion, dans le cas où l'angle θ viendrait à être trop important, une troisième composante $\beta_3$ est calculée. Cette composante est prise en compte par le seuil 47 uniquement lorsque l'angle θ dépasse une valeur prédéterminée $\theta_0$, au-delà de laquelle ce risque existe. Lorsque ce risque se présente, cette composante $\beta_3$ devient prépondérante par rapport aux première $\beta_1$ et seconde $\beta_2$ composantes évoquées ci-avant. En effet, son objectif essentiel est d'éviter que le tracteur ne vienne heurter la remorque, en injectant dans le calcul de la consigne $\beta_0$ d'angle de braquage, une composante de contre-braquage qui s'oppose rapidement à l'augmentation excessive de l'angle θ, en valeur absolue. On notera toutefois que cette troisième composante constitue un aspect optionnel de l'invention, dans la mesure où elle a pour objectif de surveiller automatiquement l'apparition de situations potentielles de mise en portefeuille, surveillance qui peut être effectuée par le chauffeur lui-même. Autrement dit, l'invention couvre des variantes de réalisation dans lesquelles cette troisième composante n'est pas calculée.

Cette composante $\beta_3$, après filtrage par un régulateur PID 48 est soustraite aux deux autres composantes $\beta_1$, $\beta_2$, elles-mêmes additionnées pour donner la consigne d'angle de braquage $\beta_0$.

Avantageusement, cette somme $\beta_0$ est saturée 49 pour éviter de dépasser l'angle maximum de braquage $\beta_{max}$ autorisé par le système de direction. Cet angle $\beta_0$ est ensuite utilisé comme consigne par le dispositif 50 assurant la commande de l'actionneur 51 responsable de la variation de l'angle de braquage β.

Ainsi, dans le cas d'un actionnement hydraulique, le vérin 51 est alimenté de telle sorte que son piston se déplace pour modifier l'angle de braquage β de la roue associée.

Ainsi, cet angle de braquage est ajusté automatiquement sans intervention du chauffeur, au fur et à mesure que le véhicule progresse en direction du point cible, selon une trajectoire qui se définit selon les asservissements décrits ci avant, en fonction du point cible sélectionné.

En pratique, les différentes étapes du procédé, et notamment les différents calculs et les asservissements peuvent être réalisées par l'intermédiaire d'un ou plusieurs calculateurs embarqués, grâce à des moyens logiciels et/ou matériels programmés à cet effet.

Il ressort de ce qui précède que le procédé conforme à l'invention permet de faciliter les opérations de marche arrière d'un véhicule articulé, dans lequel la visibilité arrière est inexistante, pour lequel les manoeuvres sont complexes.

**Revendications**

1. Procédé de commande de l'angle de braquage ($\beta$) des roues directrices d'un véhicule (1) comportant un tracteur (2) et une remorque (8) articulée par rapport au tracteur (2), permettant d'élaborer une consigne ($\beta_0$) à appliquer sur un actionneur (51) agissant sur l'angle de braquage ($\beta$), dans lequel, pendant les manoeuvres de marche arrière:

    - on sélectionne un point cible (C) par lequel on souhaite faire passer la trajectoire du véhicule ;
    - on calcule l'angle correspondant à l'angle idéal entre l'axe du tracteur et de la remorque ;
    - on calcule et on commande l'angle de braquage ($\beta$) des roues directrices, en fonction dudit point cible (C),

    **caractérisé en ce que** la sélection du point cible se fait par l'intermédiaire d'un écran de visualisation (15) du champ de vision arrière du véhicule, agencé en cabine du véhicule, et en déplaçant une mire (20) sur l'écran (15) par l'intermédiaire de l'organe de commande de direction (21).

2. Procédé selon la revendication 1, **caractérisé en ce que** le champ de vision affiché sur l'écran (15) peut être inversé.

3. Procédé selon la revendication 1, **caractérisé en ce que** le champ de vision affiché sur l'écran (15) peut être en vision directe.

4. Procédé selon l'une des revendications précédentes, **caractérisé en ce que** la sélection du point cible se déroule en deux étapes, à savoir une visée, suivie d'une confirmation par exemple par l'intermédiaire d'un bouton (23), ou d'un interrupteur ou analogue.

5. Procédé selon l'une des revendications précédentes, **caractérisé en ce que** le point cible sélectionné (C) est situé à une distance prédéterminée ($x_c$) de l'arrière de la remorque.

6. Procédé selon l'une des revendications précédentes, **caractérisé en ce que** la commande de l'angle de braquage des roues directrices comporte une composante ($\beta_1$) qui est fonction du rayon de courbure de la trajectoire du point d'articulation (B) de la remorque (8) par rapport au tracteur (2).

7. Procédé selon l'une des revendications précédentes, **caractérisé en ce que**

    - on détermine une consigne d'angle ($\theta_c$) entre les axes de la remorque (33) et du tracteur (38), en fonction dudit point cible (C) et de la géométrie du véhicule,
    - on commande l'angle de braquage ($\beta$) des roues directrices selon un asservissement faisant tendre l'angle mesuré ($\beta$) entre l'axe de la remorque et le tracteur vers ladite valeur de consigne d'angle ($\theta c$).

8. Procédé selon la revendication 7, **caractérisé en ce que** la commande d'angle de braquage des roues comporte une composante ($\beta_2$) qui est fonction de la différence entre l'angle ($\beta$) mesuré entre les axes du tracteur (38) et de la remorque (33) et ledit angle de consigne ($\theta_c$).

9. Procédé selon la revendication 7 ou 8, **caractérisé en ce que** la commande de l'angle de braquage des roues directrices comporte une composante ($\beta_3$) prise en compte lorsque l'angle ($\theta$) entre les axes (33, 38) du tracteur et de la remorque dépasse un seuil prédéterminé ($\theta_0$), et destinée à réduire ledit angle ($\theta$).

10. Procédé selon l'une des revendications précédentes, **caractérisé en ce qu'**il est mis en oeuvre sur un véhicule dans lequel la commande de direction est de type "steer by wire".

11. Procédé selon la revendication 10, **caractérisé en ce qu'**il est mis en oeuvre sur un véhicule dans lequel la direction fonctionne sans colonne de direction mécanique, mais par l'intermédiaire d'un circuit de commande électrique, électro-hydraulique ou hydraulique, commandant un actionneur agissant sur l'angle de braquage des roues directrices.

12. Procédé selon la revendication 10 ou 11, **caractérisé en ce que** le chauffeur peut faire évoluer la position du point cible en agissant sur l'organe de commande de direction (21) pendant la manoeuvre de marche arrière automatisée.

**Patentansprüche**

1. Verfahren zur Steuerung des Einschlagwinkels (β) der gelenkten Räder eines Fahrzeugs (1), das eine Zugmaschine (2) und einen bezüglich der Zugmaschine (2) angelenkten Anhänger (8) umfasst, welches die Bestimmung eines Sollwerts ($β_0$) erlaubt, der auf ein Stellglied (51) anzuwenden ist, das auf einen Einschlagwinkel (β) wirkt, bei welchem während der Rückwärtsfahrmanöver

   - ein Zielpunkt (C) ausgewählt wird, über den die Bahn des Fahrzeugs verlaufen soll,
   - der Winkel berechnet wird, der dem Idealwinkel zwischen der Achse der Zugmaschine und des Anhängers entspricht,
   - der Einschlagwinkel (β) der gelenkten Räder in Abhängigkeit vom Zielpunkt (C) berechnet und gesteuert wird,

   **dadurch gekennzeichnet, dass** die Auswahl des Zielpunktes über einen in der Fahrzeugkabine angeordneten Visualisierungsbildschirm (15) des hinteren Sichtfeldes des Fahrzeugs und durch Verschieben eines Anzielpunktes (20) auf dem Bildschirm (15) über die Lenkung Mitglied (21).

2. Verfahren nach Anspruch 1, **dadurch gekennzeichnet, dass** das auf dem Bildschirm (15) angezeigte Sichtfeld umgekehrt werden kann.

3. Verfahren nach Anspruch 1, **dadurch gekennzeichnet, dass** das auf dem Bildschirm (15) angezeigte Sichtfeld in direkter Sicht sein kann.

4. Verfahren nach einem der vorhergehenden Ansprüche, **dadurch gekennzeichnet, dass** die Auswahl des Zielpunktes in zwei Schritten erfolgt, nämlich ein Anvisieren gefolgt von einer Bestätigung beispielsweise über einen Knopf (23) oder einen Schalter oder dergleichen.

5. Verfahren nach einem der vorhergehenden Ansprüche, **dadurch gekennzeichnet, dass** sich der gewählte Zielpunkt (C) in einem vorherbestimmten Abstand ($x_c$) hinter dem Anhänger befindet.

6. Verfahren nach einem der vorhergehenden Ansprüche, **dadurch gekennzeichnet, dass** die Steuerung des Einschlagwinkels der gelenkten Räder eine Komponente ($β_1$) umfasst, die abhängig vom Krümmungsradius der Bahn des Anlenkpunkts (B) des Anhängers (8) bezogen auf die Zugmaschine (2) ist.

7. Verfahren nach einem der vorhergehenden Ansprüche, **dadurch gekennzeichnet, dass**

   - ein Sollwert des Winkels ($θ_c$) zwischen den Achsen des Anhängers (33) und der Zugmaschine (38) abhängig vom Zielpunkt (C) und der Geometrie des Fahrzeugs bestimmt wird,
   - der Einschlagwinkel (β) der gelenkten Räder gemäß einer Regelung gesteuert wird, die den zwischen der Achse des Anhängers und der Zugmaschine gemessenen Winkel (β) zum Sollwert des Winkels ($θ_c$) tendieren lässt.

8. Verfahren nach Anspruch 7, **dadurch gekennzeichnet, dass** die Steuerung des Einschlagwinkels der Räder eine Komponente ($β_2$) umfasst, die abhängig ist von der Differenz zwischen dem zwischen den Achsen der Zugmaschine (38) und des Anhängers (33) gemessenen Winkel (β) und dem Sollwert ($θ_c$).

9. Verfahren nach Anspruch 7 oder 8, **dadurch gekennzeichnet, dass** die Steuerung des Einschlagwinkels der gelenkten Räder eine Komponente ($β_3$) umfasst, die berücksichtigt wird, wenn der Winkel (θ) zwischen den Achsen (33, 38) der Zugmaschine und des Anhängers einen vorherbestimmten Schwellenwert ($θ_0$) überschreitet, und die dazu bestimmt ist, den Winkel (θ) zu verringern.

10. Verfahren nach einem der vorhergehenden Ansprüche, **dadurch gekennzeichnet, dass** es bei einem Fahrzeug durchgeführt wird, dessen Lenkungssteuerung in der Bauweise "steer by wire" erfolgt.

11. Verfahren nach Anspruch 10, **dadurch gekennzeichnet, dass** es bei einem Fahrzeug durchgeführt wird, bei dem die Lenkung ohne mechanische Lenksäule, sondern über einen elektrischen, elektro-hydraulischen oder hydraulischen Steuerkreis funktioniert, der ein Stellglied steuert, das auf den Einschlagwinkel der gelenkten Räder wirkt.

12. Verfahren nach Anspruch 10 oder 11, **dadurch gekennzeichnet, dass** der Fahrer die Position des Zielpunktes durch Einwirken auf die Lenkung Mitglied (21) während des automatisierten Rückwärtsfahrmanövers verändern kann.

**Claims**

1. Method for controlling the steering angle (β) of the steered wheels of a vehicle (1) comprising a tractor (2) and a trailer (8) that is articulated with respect to the tractor (2), so that a setpoint value ($β_0$) to be applied to an actuator (51) acting on the steering angle (β) can be formulated, in which, during the reversing manoeuvres:

   - a target point (C) through which the path of the vehicle is to pass is selected;

- the angle corresponding to the ideal angle between the axis of the tractor and of the trailer is calculated;
- the steering angle ($\beta$) for the steered wheels is calculated and controlled as a function of said target point (C),

**characterized** in that the target point is selected via a display screen (15) that displays the field of view behind the vehicle and is arranged in the cab of the vehicle and by moving a sighting point (20) on the screen (15) using the steering control member (21).

2. Method according to Claim 1, **characterized in that** the field of view displayed on the screen (15) can be inverted.

3. Method according to Claim 1, **characterized in that** the field of view displayed on the screen (15) may be a direct view.

4. Method according to one of the preceding claims, **characterized in that** the selection of the target point is performed in two stages, namely a sighting, followed by a confirmation, for example using a button (23) or a switch or the like.

5. Method according to one of the preceding claims, **characterized in that** the selected target point (C) is situated at a predetermined distance ($x_c$) behind the trailer.

6. Method according to one of the preceding claims, **characterized in that** control of the steering angle for the steered wheels involves a component ($\beta_1$) which is a function of the radius of curvature of the path of the point (B) at which the trailer (8) is articulated to the tractor (2).

7. Method according to one of the preceding claims, **characterized in that**

- a setpoint value ($\theta_c$) is determined for the angle between the axes of the trailer (33) and of the tractor (38) as a function of said target point (C) and of the geometry of the vehicle,
- the steering angle ($\beta$) for the steered wheels is controlled as a result of feedback control that causes the measured angle ($\beta$) between the axes of the trailer and of the tractor to tend toward said setpoint angle value ($\theta_c$).

8. Method according to Claim 7, **characterized in that** control of the steering angle for the wheels involves a component ($\beta_2$) which is a function of the difference between the measured angle ($\beta$) between the axes of the tractor (38) and of the trailer (33), and said setpoint angle ($\theta_c$).

9. Method according to Claim 7 or 8, **characterized in that** control of the steering angle of the steered wheels involves a component ($\beta_3$) taken into account when the angle ($\theta$) between the axes (33, 38) of the tractor and of the trailer crosses a predetermined threshold ($\theta_0$) and which is intended to reduce said angle ($\theta$).

10. Method according to one of the preceding claims, **characterized in that** it is implemented on a vehicle in which the steering control is of the "steer by wire" type.

11. Method according to Claim 10, **characterized in that** it is implemented on a vehicle in which the steering operates without a mechanical steering column but via an electrical, electro-hydraulic or hydraulic control circuit that controls an actuator that influences the steering angle of the steered wheels.

12. Method according to Claim 10 or 11, **characterized in that** the driver can change the position of the target point by acting on the steering control member (21) during an automated reversing manoeuvre.

**Fig. 1**

**Fig. 2**

Sélection point cible — 25

26 — Calcul $\Theta_c$

27 — Calcul $\beta_o$

28 — Point cible atteint?

oui → FIN

non

29 — Changement point cible?

non

oui

Fig. 3

**Fig. 4**

**Fig. 5**

EP 1 896 314 B1

**Fig. 6**

EP 1 896 314 B1

## RÉFÉRENCES CITÉES DANS LA DESCRIPTION

**Documents brevets cités dans la description**

- DE 10142367
- US 6366221 B
- US 6564122 B
- WO 2004022413 A
- US 5247442 A
- WO 2004022414 A